# FASCICULE DE BREVET EUROPEEN

(11) **EP 2 614 176 B1**
(45) Date de publication et mention de la délivrance du brevet: **16.09.2015**
(21) Numéro de dépôt: 11749426.0
(22) Date de dépôt: 31.08.2011
(51) Int. Cl.: C25B 1/06, C25B 9/18, C25B 9/00

(54) **ELECTROLYSEUR A HAUTE TEMPERATURE (EHT) A SURETE DE FONCTIONNEMENT AMELIOREE**
HOCHTEMPERATUR-ELEKTROLYSATOR (HTE) MIT ERHÖHTER BETRIEBSSICHERHEIT
HIGH-TEMPERATURE ELECTROLYSER (HTE) WITH IMPROVED OPERATING SAFETY

(30) Priorité: 06.09.2010 FR 1057054
(43) Date de publication de la demande: 17.07.2013
(73) Titulaire: Commissariat à l'Énergie Atomique et aux Énergies Alternatives, 75015 Paris (FR)
(72) Inventeur: LE GALLO, Patrick, F-38160 Saint Appolinard (FR)
(74) Mandataire: Ilgart, Jean-Christophe
(86) Numéro de dépôt international: PCT/EP2011/065003
(87) Numéro de publication internationale: WO 2012/031958

(56) Documents cités:
- FR-A- 2 921 389
- US-A1- 2008 254 333

## Description

### DOMAINE TECHNIQUE

La présente invention concerne un procédé d'électrolyse d'eau à hautes températures en vue de produire de l'hydrogène.

Elle concerne également un réacteur de mise en oeuvre du procédé et un module à enceinte étanche associé.

Elle a trait plus particulièrement à une amélioration de la sureté de fonctionnement d'électrolyseurs à hautes températures, en réduisant les risques de fuites susceptibles d'entraîner des pertes de rendement et/ou des casses éventuelles de tout ou partie de ses éléments.

### ART ANTÉRIEUR

Un électrolyseur à hautes températures (EHT) comporte une pluralité de cellules élémentaires formées par une cathode et une anode séparées par un électrolyte, les cellules élémentaires étant raccordées électriquement en série au moyen de plaques interconnectrices interposées, en général, entre une anode d'une cellule élémentaire et une cathode de la cellule élémentaire suivante. Une connexion anode-anode suivie par une connexion cathode-cathode est également possible. Les plaques interconnectrices sont des composants conducteurs électroniques formés par au moins une plaque métallique. Ces plaques assurent par ailleurs la séparation entre le fluide cathodique circulant au niveau d'une cellule élémentaire du fluide anodique circulant dans une cellule élémentaire suivante.

L'anode et la cathode sont en matériau poreux dans lequel les gaz peuvent s'écouler.

Dans le cas de l'électrolyse de l'eau pour produire de l'hydrogène à hautes températures, de la vapeur d'eau circule au niveau de la cathode où est généré l'hydrogène sous forme gazeuse, et un gaz drainant peut circuler au niveau de l'anode et collecte ainsi l'oxygène généré sous forme gazeuse à l'anode. La plupart des électrolyseurs à haute température (EHT) utilise de l'air comme gaz drainant au niveau de l'anode.

Dans les électrolyseurs à haute température, les étanchéités sont classiquement réalisées par des joints de verre «pâteux» car ils présentent essentiellement deux avantages: une bonne isolation électronique et une bonne étanchéité sans serrage mécanique requis. Les inconvénients majeurs de ces joints d'étanchéité en verre pâteux sont par contre :
- fragilité en dessous de sa température de transition vitreuse et possibilité de rupture s'il est sollicité, notamment du fait des dilatations différentielles ;
- difficulté de combler l'épaisseur d'une cellule à cathode support (poreux d'épaisseur importante) en garantissant une étanchéité et son maintien dans le temps entre les deux compartiments anodique et cathodique, en effet ce type de cellule ne permet pas d'avoir une zone dense et résistante pour prendre appui pour faire l'étanchéité. En outre, les verres ou autres pâtes ne pénètrent pas les pores du poreux ;

- nécessité d'usinage de gorge pour recevoir le verre, du fait que de nombreux types de verre sont obtenus in situ à partir de barbotines ;
- impossibilité d'avoir une conception de l'électrolyseur EHT dite « au plafond » ou verticale du fait d'un joint en verre dans sa gorge est susceptible de couler,
- du fait de l'impossibilité d'une conception de l'électrolyseur EHT au plafond, compression différenciée avec une compression plus importante des cellules en bas de l'empilement due au poids de celui-ci, ce qui limite le nombre de cellules empilées,
- nécessité d'une excursion en température au delà de la température de fonctionnement pour réaliser le joint ; cette excursion est néfaste pour les matériaux métalliques et implique donc une plus grande dégradation,
- difficulté de conserver une étanchéité sous un différentiel de pression élevé (>100 mbar), du fait que le verre visqueux aux températures de fonctionnement flue,
- difficulté de maintenir un taux de fuite faible en cas de variations de température de fonctionnement (rupture thermomécanique du film de verre), plus particulièrement après une période donnée d'arrêt de production d'hydrogène et reprise du fonctionnement de l'électrolyse,
- incompatibilité chimique potentielle avec les autres composants de la cellule et de(s) l'interconnecteur(s), par exemple émission de vapeurs de SiO₂ polluantes pour les électrodes, avec en conséquence corrosion importante des portées de joints,
- création d'une liaison rigide entre les composants de l'empilement par perte de la viscosité du verre au cours d'un refroidissement, générant des sollicitations lors des transitoires thermiques,
- difficulté de démontage des composants, voire impossibilité sans changer la cellule ou l'empilement de cellules.

D'autres solutions consistent à braser le métal de l'interconnecteur sur la céramique. Or, l'obtention du mouillage du métal de l'interconnecteur sur la céramique ainsi que les différences de dilatation thermique entre ces deux matériaux rendent cette opération très difficile pour des grandes dimensions. En effet, le refroidissement après la solidification de la brasure provoque régulièrement la rupture de la céramique.

Enfin, d'autres joints compressifs à base de mica, ou simplement métalliques, ont été proposés : ils nécessitent un volume important et un serrage extérieur très important et difficile à contrôler et à maintenir en température pour obtenir une étanchéité efficace sans rupture de la cellule en cours de chauffage. En effet, aux températures de fonctionnement, le serrage très important implique du fluage, et donc des modifications de la structure d'électrolyseur et donc au mieux une perte d'étanchéité.
US2008/254333 divulge un réacteur pour électrolyse de l'eau à hautes températures dans lequel chaque extrémité d'entrée cathodique est agencée à proximité géométrique, mais pas hydraulique, de la partie de conduit de collecte d'hydrogène et chaque extrémité d'entrée anodique est agencée à proximité géométrique, mais pas hydraulique, de la partie de conduit de collecte d'hydrogène.
Afin d'améliorer la sureté de fonctionnement d'un électrolyseur EHT, l'inventeur a proposé, dans la demande de brevet FR 10 51783 déposée au nom de la demanderesse, de faire circuler de la vapeur d'eau contenant au plus 1% d'H2 à la fois à la cathode et à l'anode en tant que gaz drainant.

L'inventeur en a conclu qu'une telle circulation de vapeur d'eau non hydrogénée ou quasiment permet de s'affranchir de solutions d'étanchéité sophistiquée en particulier au niveau d'une traversée d'un interconnecteur en dessous de l'anode par un conduit de récupération de l'hydrogène produit. En effet, si une fuite a effectivement lieu à ce niveau, la vapeur d'eau non hydrogénée vient s'intercaler pour former en quelque sorte un coussin d'eau ou autrement dit un tampon de gaz.

Le but de l'invention est alors de proposer une optimisation de cette zone tampon créée par circulation de vapeur d'eau à la fois à la cathode et à l'anode en tant que gaz drainant, dans un électrolyseur EHT.

### EXPOSÉ DE L'INVENTION

Pour ce faire, l'invention a pour objet un réacteur pour électrolyse de l'eau à hautes températures, comprenant un empilement de cellules d'électrolyse élémentaires formées chacune d'une cathode, d'une anode et d'un électrolyte intercalé entre la cathode et l'anode, au moins une plaque interconnectrice étant agencée entre deux cellules élémentaires adjacentes et en contact électrique avec une électrode d'une des deux cellules élémentaires et une électrode de l'autre des deux cellules élémentaires, la plaque interconnectrice délimitant au moins un compartiment cathodique et au moins un compartiment anodique pour la circulation de gaz respectivement à la cathode et l'anode,
dans lequel l'une des extrémités des compartiments cathodique, dite extrémité d'entrée cathodique, est reliée à une alimentation adaptée pour délivrer de la vapeur d'eau et l'une des extrémités des compartiments anodique, dite extrémité d'entrée anodique, est également reliée à une alimentation adaptée pour délivrer de la vapeur d'eau,
dans lequel l'autre des extrémités des compartiments cathodique, dite extrémité de sortie cathodique, débouche dans la partie de conduit de collecte de l'hydrogène qui est réalisée au travers de l'empilement de cellules et des plaques interconnectrices et l'autre des extrémités des compartiments anodique, dite extrémité de sortie anodique, débouche dans la partie de conduit de collecte de l'oxygène qui est réalisée au travers de l'empilement de cellules et des plaques interconnectrices.

Selon l'invention, chaque extrémité d'entrée cathodique est agencée à proximité de la partie de conduit de collecte d'oxygène et/ou de collecte d'hydrogène et chaque extrémité d'entrée anodique est agencée à proximité de la partie de conduit de collecte d'hydrogène et/ou de collecte d'oxygène.

On précise ici que la notion d'extrémité est à comprendre au sens large de la fluidique et non au sens strict géométrique. Ainsi, une extrémité d'entrée peut être définie comme étant une zone fluidique à partir de laquelle la réaction d'électrolyse se produit avec de la vapeur d'eau (extrémité d'entrée de cathode) ou une zone fluidique à partir de laquelle l'oxygène produit est évacué par de la vapeur d'eau (extrémité d'entrée d'anode). De même, une extrémité de sortie peut être définie comme étant une zone fluidique à partir de laquelle la réaction d'électrolyse ne se produit plus (extrémité de sortie de cathode) ou une zone fluidique à partir de laquelle l'oxygène n'est plus produit (extrémité de sortie d'anode). Il va de soi, qu'un agencement des extrémités d'entrée aux coins d'un électrolyseur constitue un cas particulier et rentre sous cette définition.

Enfin, par « à proximité de », il faut comprendre dans le cadre de l'invention que l'extrémité d'entrée de compartiment cathodique ou anodique est agencé à une distance de la périphérie de la partie du conduit de collecte respectivement d'oxygène ou d'hydrogène telle que la vapeur d'eau créé un volume tampon avec le débit quasiment celui d'alimentation de l'électrolyseur EHT et avant ou au début de la réaction de réduction qu'elle subit.

Ainsi, l'invention consiste à utiliser la vapeur d'eau non encore réduite, c'est-à-dire ne contenant pas ou très peu de l'oxygène et de l'hydrogène produits par l'électrolyse, pour créer un volume tampon autour des parties de l'électrolyseur par lesquelles l'oxygène et l'hydrogène produits sont collectés et circulent. La vapeur d'eau non encore réduite est ainsi utilisée judicieusement au plus près de son injection dans les compartiments cathodique ou anodique, en tant que tampon de séparation entre l'hydrogène et l'oxygène produits par électrolyse.

Autrement dit, l'inventeur a donc considéré qu'une optimisation d'un électrolyseur EHT et de son efficacité consistait en plus de créer une zone tampon comme évoqué dans la demande FR 10 51783 citée précédemment, de rapprocher au plus près l'entrée d'un compartiment (cathodique ou anodique) de la sortie du même compartiment et/ou d'un autre compartiment opposé.

En effet, dans une réaction d'électrolyse de l'eau, la vapeur d'eau introduite à la cathode est apte à se transformer immédiatement en hydrogène et donc lorsqu'on l'utilise pour faire l'étanchéité de la sortie d'oxygène (collecte de l'oxygène produit), il est avantageux de le faire au plus près de son introduction.

Et cette solution selon l'invention est loin d'avoir été évidente, dans la mesure où la solution pour faire une étanchéité entre deux zones de gaz qui est généralement admise selon l'état de l'art consiste à écarter les deux zones l'une de l'autre.

Il va de soi que l'homme de l'art veille à établir et conserver un flux de vapeur d'eau suffisant afin de renouveler en permanence la vapeur d'eau présente dans les zones tampons selon l'invention et afin que cette vapeur d'eau reste pure, c'est-à-dire non encore chargée en gaz de réaction (O2 ou H2 produits).

En ce qui concerne la vapeur d'eau à envisager dans le cadre de l'invention, elle peut être de composition identique à l'entrée de la cathode et de l'anode et contenir alors au plus 1% d'hydrogène comme décrit et revendiqué dans la demande FR 10 51783 citée ci-dessus. On peut également envisager une vapeur d'eau à l'entrée cathodique différente de la vapeur d'eau à l'entrée anodique: on peut alors avoir une vapeur d'eau contenant 5% voire 10% d'H2 à l'entrée de la cathode, et une vapeur d'eau contenant au plus 1% d'H2 à l'entrée de l'anode. Quoi qu'il en soit, on veille à ce que le débit de vapeur d'eau qui circule d'une zone tampon à un conduit de collecte reste faible.

Selon un premier mode de réalisation, le réacteur comprend au moins un conduit pour la circulation de la vapeur d'eau, le conduit étant formé dans la plaque interconnectrice, une première extrémité dudit conduit étant connectée à l'alimentation adaptée pour délivrer de la vapeur d'eau et une deuxième extrémité amenant la vapeur d'eau, débouchant dans une zone à proximité de chaque extrémité d'entrée cathodique ou anodique et de l'une et/ou de l'autre des parties de conduit de collecte d'oxygène et d'hydrogène réalisées au travers de l'empilement de cellules et des plaques interconnectrices, la zone étant conçue pour créer un volume tampon de ladite vapeur d'eau autour de la périphérie de l'une et/ou de l'autre de la partie de conduit de collecte d'oxygène et d'hydrogène avant son arrivée dans l'extrémité d'entrée cathodique ou anodique.

Selon ce mode, au moins une nervure peut être avantageusement agencée autour de la périphérie de l'une ou l'autre de la partie de conduit de collecte d'oxygène et d'hydrogène, la(es) nervure(s) étant adaptée(s) pour permettre le guidage par refoulement de la vapeur d'eau à la sortie de la deuxième extrémité du conduit vers l'extrémité d'entrée cathodique ou anodique. La nervure peut correspondre de fait à un joint métallique de conception simple, qui même de faibles performances intrinsèques, permet de réduire considérablement le débit de vapeur d'eau à l'intérieur de partie de conduit de collecte.

Selon ce mode également, on prévoit avantageusement une pluralité de nervures supplémentaires agencées en regard de la nervure autour de la périphérie de l'une ou l'autre de la partie de conduit de collecte d'oxygène et d'hydrogène, l'espace entre deux nervures supplémentaires adjacentes délimitant une extrémité d'entrée cathodique ou anodique permettant d'augmenter la vitesse de la vapeur d'eau refoulée.

Selon un autre mode de réalisation, on peut aussi prévoir que chaque extrémité d'entrée cathodique et/ou anodique soit agencée en périphérie du réacteur pour recevoir de la vapeur d'eau autour du réacteur, et à proximité de l'une et/ou de l'autre des parties de conduit de collecte d'oxygène et d'hydrogène réalisées au travers de l'empilement de cellules et des plaques interconnectrices, la zone définie entre l'extrémité d'entrée cathodique ou anodique et de l'une et/ou de l'autre des parties de conduit de collecte d'oxygène et d'hydrogène étant conçue pour créer un volume tampon de ladite vapeur d'eau autour de la périphérie de l'une ou l'autre de la partie de conduit de collecte d'oxygène et d'hydrogène.

Selon ce mode, au moins une nervure peut être agencée autour de la périphérie de l'une et/ou de l'autre de la partie de conduit de collecte d'oxygène et d'hydrogène, la(es) nervure(s) étant adaptée(s) pour permettre le guidage périphérique de la vapeur d'eau autour de ladite partie de conduit de collecte.

La nervure peut correspondre de fait à un joint métallique de conception simple, qui même de faibles performances intrinsèques, permet de réduire considérablement le débit de vapeur d'eau à l'intérieur de partie de conduit de collecte.

Le réacteur pour électrolyse de l'eau à hautes températures selon l'invention est destiné à fonctionner à des températures supérieures à 450°C, typiquement comprises entre 700°C et 1000°C.

### BRÈVE DESCRIPTION DES DESSINS

D'autres caractéristiques et avantages ressortiront mieux à la lecture de la description détaillée faite en référence suivante parmi lesquelles :
- la figure 1 est une vue de côté d'un mode de réalisation d'un réacteur pour électrolyse à hautes températures selon la présente invention,
- la figure 1A est une vue en coupe du réacteur de la figure 1 selon le plan A-A en fonctionnement normal d'électrolyse,
- la figure 1B est une vue en coupe du réacteur de la figure 1 selon le plan B-B également en fonctionnement normal,
- la figure 2 est une vue de détail en perspective du réacteur selon les figures 1-1B à proximité d'une extrémité d'entrée cathodique et d'une partie de collecte d'oxygène,
- la figure 2A correspond à la vue de détail de la figure 2 mais selon une vue d'une face 8A du compartiment cathodique,
- la figure 2B correspond à la vue de détail de la figure 2 mais selon une vue d'une face 8B du compartiment anodique,
- la figure 3 est une vue de détail en perspective du réacteur selon les figures 1-1B à proximité d'une extrémité d'entrée anodique et d'une partie de collecte d'hydrogène,
- la figure 3A correspond à la vue de détail de la figure 3 mais selon une vue d'une face 8B du compartiment anodique,
- la figure 3B correspond à la vue de détail de la figure 3 mais selon une vue d'une face 8A du compartiment cathodique.

### EXPOSÉ DÉTAILLÉ DE MODES DE RÉALISATION PARTICULIERS

On décrit l'invention en relation avec un type d'architecture d'électrolyseur de l'eau à hautes températures pour produire de l'hydrogène. Il va de soi que l'invention peut s'appliquer à d'autres architectures. Les hautes températures auxquelles fonctionne l'électrolyseur représenté sont supérieures à 450°C, typiquement comprises entre 700°C et 1000°C.

On précise que les termes « amont » et « aval » sont utilisés par référence avec le sens de circulation de la vapeur d'eau et de l'hydrogène produit à la cathode.

On précise que les représentations des différents éléments ne sont pas à l'échelle.

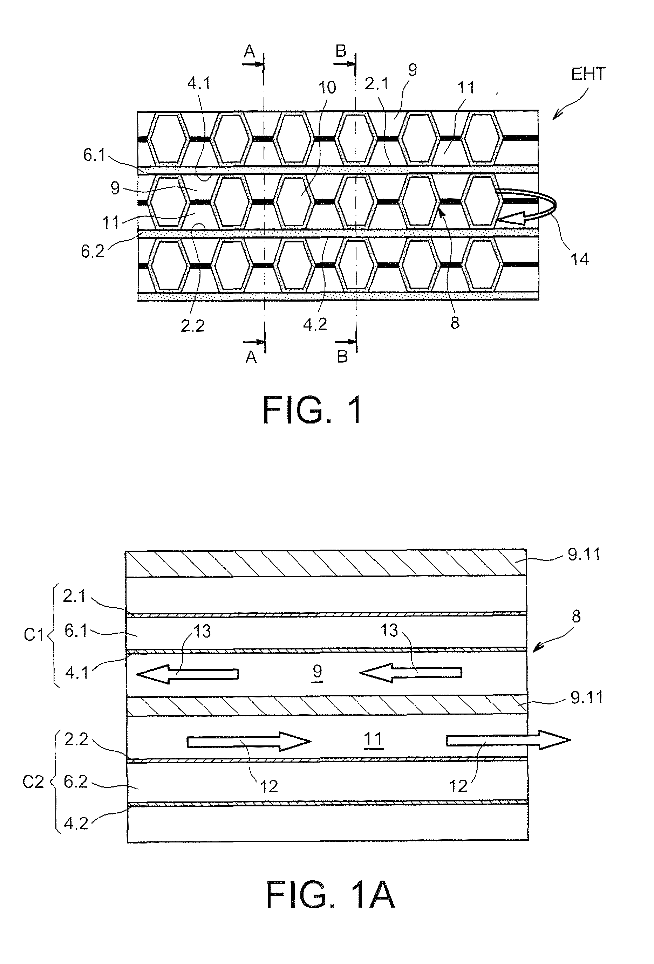

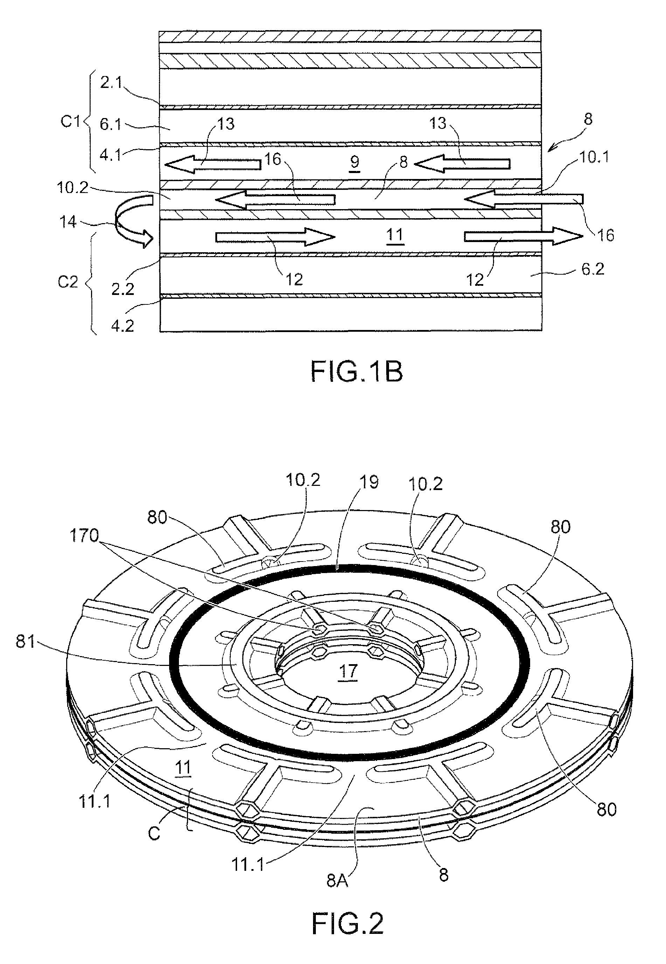

Sur la figure 1, on a représenté un électrolyseur EHT selon la présente invention comportant une pluralité de cellules élémentaires C1, C2... empilées.

Chaque cellule élémentaire comporte un électrolyte disposé entre une cathode et une anode.

Dans la suite de la description, nous décrirons en détail les cellules C1 et C2 et leur interface.

La cellule C1 comporte une cathode 2.1 et une anode 4.1 entre lesquelles est disposé un électrolyte 6.1, par exemple solide généralement d'épaisseur 100 µm pour les cellules dites à électrolyte support et d'épaisseur de quelques µm pour les cellules dites à cathode support.

La cellule C2 comporte une cathode 2.2 et une anode 4.2 entre lesquelles est disposé un électrolyte 6.2.

Les cathodes 2.1, 2.2 et les anodes 4.1, 4.2 sont réalisées en matériau poreux et ont par exemple une épaisseur de 40 µm chacune pour les cellules dites à électrolyte support et une épaisseur de l'ordre de 500 µm et 40 µm respectivement pour les cellules dites à cathode support.

L'anode 4.1 de la cellule C1 est reliée électriquement à la cathode 2.2 de la cellule C2 par une plaque interconnectrice 8 venant en contact avec l'anode 4.1 et la cathode 2.2. Par ailleurs, elle permet l'alimentation électrique de l'anode 4.1 et de la cathode 2.2.

Une plaque interconnectrice 8 est interposée entre deux cellules élémentaires C1, C2.

Dans l'exemple représenté, elle est interposée entre une anode d'une cellule élémentaire et la cathode de la cellule adjacente. Mais on pourrait prévoir qu'elle soit interposée entre deux anodes ou deux cathodes.

La plaque interconnectrice 8 définit avec l'anode et la cathode adjacentes des canaux pour la circulation de fluides. Plus précisément, Ils définissent des compartiments anodiques 9 dédiés à la circulation des gaz au niveau de l'anode 4 et des compartiments cathodiques 11 dédiés à la circulation des gaz au niveau de la cathode 2.

Dans l'exemple représenté, un compartiment anodique 9 est séparé d'un compartiment cathodique 11 par une paroi 9.11. Dans l'exemple représenté, la plaque interconnectrice 8 comporte en outre au moins un conduit 10 délimitant avec la paroi 9.11, les compartiments anodiques 9 et les compartiments cathodiques 11.

Dans l'exemple représenté, la plaque interconnectrice comporte une pluralité de conduits 10 et une pluralité de compartiments anodiques 9 et cathodiques 11. De manière avantageuse, le conduit 10 et les compartiments ont des sections hexagonales, en nid d'abeille, ce qui permet d'augmenter la densité de compartiments 9, 11 et des conduits 10.

Tel que représenté en figure 1A, on fait circuler de la vapeur d'eau non hydrogénée à chaque cathode 2.1, 2.2 et à l'anode 4.1, 4.2 en tant que gaz drainant. Cette circulation à la fois à l'anode et à la cathode de vapeur d'eau non hydrogénée permet de réduire les risques de fuites susceptibles d'entraîner des pertes de rendement et/ou des casses de tout ou partie de l'électrolyseur qui en découlent.

Les flèches 12 et 13 de la figure 1A représentent ainsi clairement le parcours simultané et à la même pression de la vapeur d'eau non hydrogénée dans les compartiments anodiques 9 et cathodiques 11.

L'écoulement symbolisé est ici fait en sens inverse entre un compartiment anodique 9 d'une cellule C1 et un compartiment cathodique 11 d'une cellule adjacente C2 (flèches 12 et 13 en sens opposé).

Tel que représenté en figure 1B, l'architecture de l'électrolyseur permet en outre de connecter la première extrémité 10.1 du conduit 10 à une alimentation en vapeur d'eau non hydrogénée via un autre conduit et de connecter la deuxième extrémité 10.2 du conduit 10 au compartiment cathodique 11. La flèche 14 symbolise ainsi l'écoulement de retour de la vapeur d'eau non hydrogénée depuis son écoulement dans le conduit 10 (flèches 16) vers le compartiment cathodique 11.

Selon l'invention, chaque extrémité d'entrée cathodique 11.1 est agencée à proximité de la partie 17 de conduit de collecte d'oxygène qui est réalisée au travers de l'empilement de cellules C1, C2....Cn et des plaques interconnectrices 8, et chaque extrémité d'entrée anodique 9.1 est agencée à proximité de la partie de conduit 18 de collecte d'hydrogène qui est réalisée au travers de l'empilement de cellules C1, C2...Cn et des plaques interconnectrices 8.

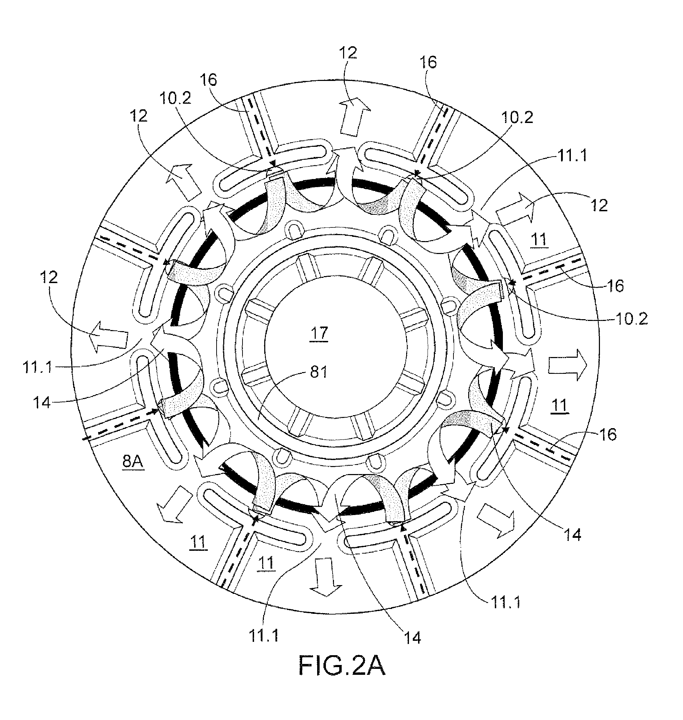

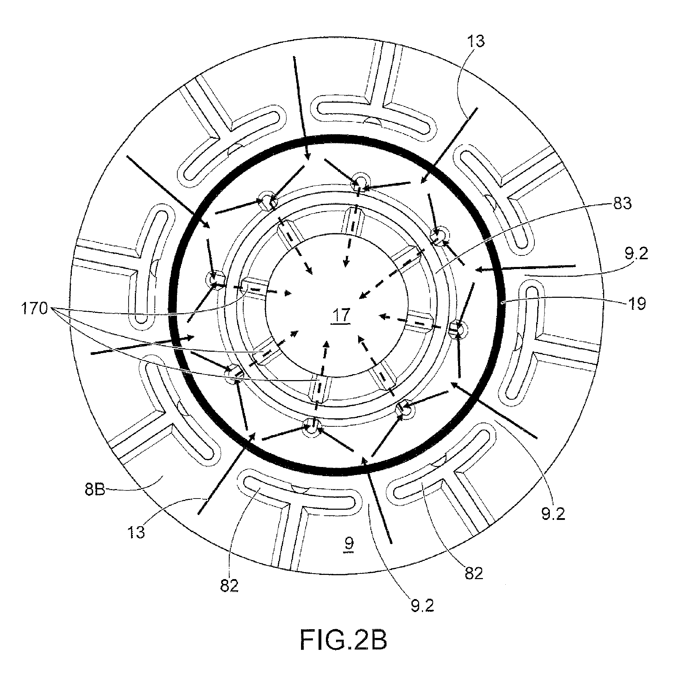

Ainsi selon l'invention, et comme représenté aux figures 2 à 2A, une face 8A de la plaque interconnectrice 8 comporte l'extrémité 10.2 de chaque conduit 10 débouchant dans une zone entre deux nervures 80, 81 de la plaque interconnectrice 8.

L'espace entre deux nervures adjacentes 80 délimite l'extrémité d'entrée 11.1 du compartiment cathodique 11. La nervure 81, quant à elle délimite la périphérie de la partie 17 du conduit de collecte d'oxygène produit à l'anode 9. Comme illustré, il est prévu un agencement régulier des conduits 10, leur extrémité 10.2 étant distante l'une de l'autre selon un angle déterminé tout comme les extrémités 11.1 intercalées individuellement entre deux extrémités 10.2 des conduits.

Comme représenté en figure 2B, l'autre face 8B de la plaque interconnectrice 8, c'est-à-dire celle opposée à celle 8A, comporte également des nervures 82, 83.

L'espace entre deux nervures 82 délimite l'extrémité de sortie 9.2 du compartiment anodique 9.

La nervure 83, quant à elle délimite la périphérie de la partie 17 du conduit de collecte d'oxygène produit à l'anode 9.

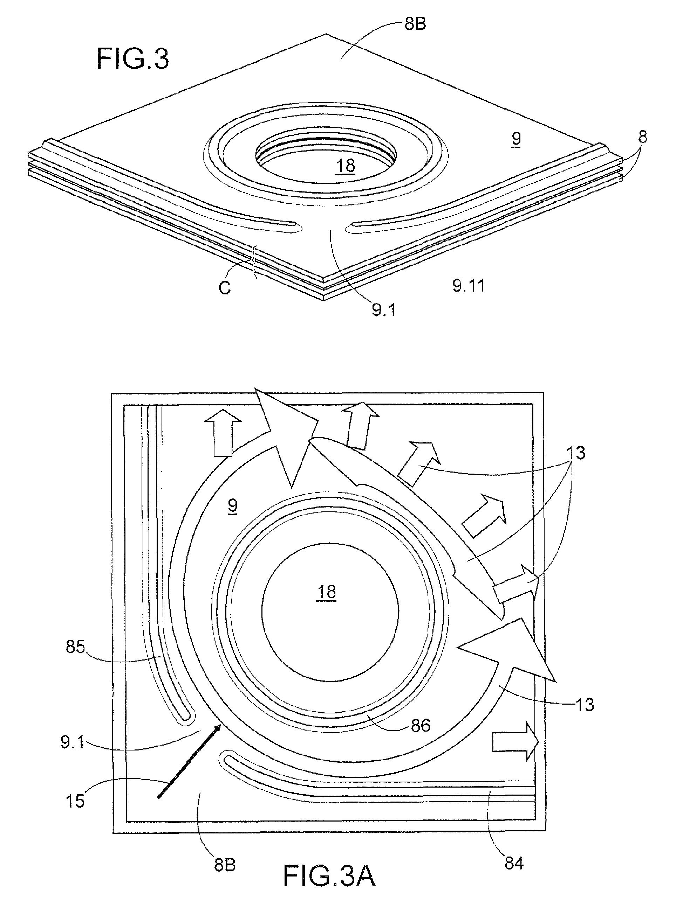

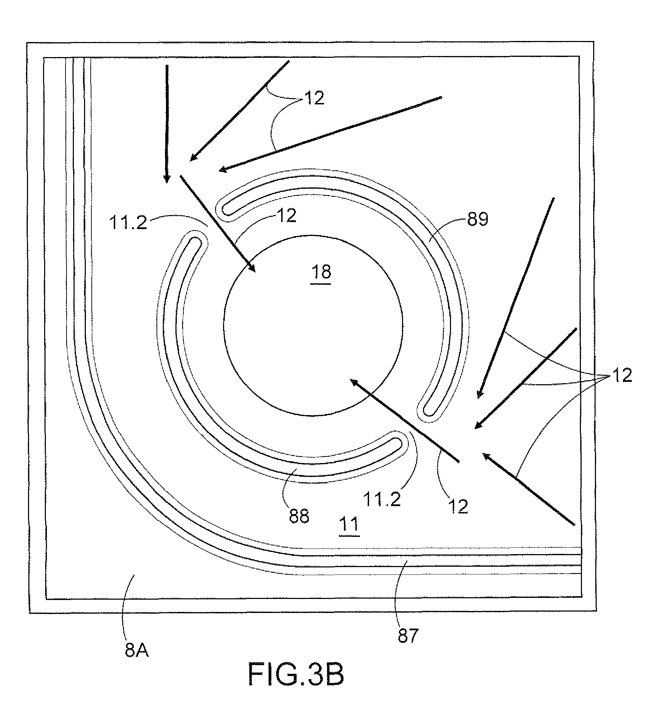

Enfin, cette face 8B comprend des conduits 170 de collecte de l'oxygène produit à l'anode 9. Comme illustré, il est prévu un agencement régulier des conduits 170, leur extrémité étant distante l'une de l'autre selon un angle déterminé tout comme les extrémités 9.2 d'anode. Un conduit 170 tel qu'illustré sous forme de tunnel permet une meilleure reprise des efforts de pincement d'une cellule d'électrolyse C entre les nervures 81 et 83. Selon l'invention également, et comme représenté aux figures 3 et 3A, la face 8B de la plaque interconnectrice 8 comporte à sa périphérie une zone délimitée par deux nervures 84, 85. L'espace entre ces deux nervures 84, 85 délimite l'extrémité d'entrée 9.1 du compartiment anodique 9. Une autre nervure 86, quant à elle délimite la périphérie de la partie du conduit de collecte 18 d'hydrogène produit à la cathode 11.

Comme représenté en figure 3B, l'autre face 8A de la plaque interconnectrice 8 comporte à sa périphérie une nervure 87. Deux autres nervures 88, 89 délimitent l'extrémité de sortie 11.2 du compartiment cathodique 11 et la périphérie de la partie 18 du conduit de collecte d'hydrogène produit à la cathode 11.

Dans l'exemple représenté, Les plaques interconnectrices 8 sont réalisées par assemblage de deux tôles embouties soudées entre elles, en particulier au moyen d'un cordon de soudure 19 autour de la partie 17 de conduit de collecte d'oxygène. Ainsi, les nervures 80, 81, 82, 83, 84, 85, 86, 87, 88, 89 sont des nervures d'embouti.

Dans le mode de réalisation des figures 3 à 3B, on ne prévoit pas de cordon de soudure autour de la partie 18 de conduit de collecte d'oxygène.

On précise ici que le mode de réalisation d'un électrolyseur EHT des figures 3 à 3B nécessite l'utilisation d'une enveloppe étanche adaptée pour contenir de la vapeur d'eau contenant au plus 1 % d'hydrogène, autour de l'empilement de cellules d'électrolyse comme décrit et revendiqué dans la demande FR 10 51783.

Le fonctionnement de l'électrolyseur décrit ci-dessus peut être ainsi résumé de la manière suivante : la vapeur d'eau non hydrogénée, éventuellement préalablement chauffée, pénètre dans le conduit 10. Lors de son déplacement dans le conduit 10, elle est chauffée par échange thermique avec la cathode 11 et l'anode 9 bordant la plaque interconnectrice 8.

D'une part, cette vapeur d'eau non hydrogénée chauffée à une température proche de celle de la cellule C1 pénètre dans le compartiment cathodique 11 par l'extrémité 11.1 (flèches 14 des figures 1B et 2A).

Plus exactement, en référence à la figure 2A, le flux de vapeur d'eau non hydrogénée, chauffé et qui n'a encore subi aucune réduction, sort de l'extrémité 10.2 du conduit 10 et entre dans l'extrémité 11.1 de cathode par refoulement en quelque sorte sur la nervure 81. Ce refoulement de flux de vapeur d'eau non hydrogénée et non encore réduite crée selon l'invention un volume tampon de gaz sur toute la périphérie de la nervure 81, c'est-à-dire sur toute la périphérie du conduit 17 de collecte d'oxygène, comme cela ressort des flèches larges incurvées symbolisées en figure 2A. Ce volume tampon est en légère surpression par conception avec l'oxygène collecté dans le conduit 17. La fonction de la nervure 81 est ainsi de permettre le guidage par refoulement de la vapeur d'eau à la sortie de la deuxième extrémité 10.2 du conduit 10 vers l'extrémité d'entrée cathodique 11.1 ou anodique 9.1. La distance entre deux nervures supplémentaires adjacentes 80 agencées en regard de la nervure 81 délimite une extrémité d'entrée cathodique 11.1 permettant ainsi d'augmenter la vitesse de la vapeur d'eau refoulée au passage de ladite extrémité. On améliore ainsi la performance de la zone tampon selon l'invention. En effet, en forçant en quelque sorte la vapeur d'eau refoulée avec des vitesses plus grandes au niveau des passages 11.1, évite qu'un phénomène de rétrodiffusion des gaz produits (H2 ou 02) n'ait lieu. Autrement dit, le risque de remontée des gaz produits à contre courant de la zone tampon vers la partie du conduit de collecte est réduit. Autrement dit encore, les rétrécissements de section 11.1 prévus dans le mode de réalisation des figures 2 à 2B, permettent d'augmenter la vitesse de la vapeur d'eau à l'entrée d'un compartiment cathodique ou anodique afin d'éviter la rétrodiffusion évoquée. La vapeur d'eau non hydrogénée ayant pénétré les compartiments cathodiques 11 subit une réduction en entrant en contact avec les cathodes 2. De l'hydrogène est alors généré selon la réaction :

2 H₂O→ 2H₂+O₂.

L'hydrogène généré par réduction tout au long des compartiments cathodiques 11 est collecté dans le conduit de collecte dédié 18. Plus précisément comme illustré en figure 3B, l'hydrogène produit circulant selon les flèches 12, parvient dans la zone périphérique de la face 8A jusqu'à l'extrémité de sortie 11.2 cathodique entre les nervures 88 et 89 et pénètre dans le conduit de collecte 18.

D'autre part, simultanément de la vapeur d'eau non hydrogénée et ne contenant pas encore d'oxygène pénètre par la périphérie de la plaque interconnectrice 8 dans le compartiment anodique 9 par l'extrémité 9.1 délimitée par les nervures 84, 85 (flèche 15 de la figure 3A). Plus exactement, ce flux de vapeur d'eau non hydrogénée et ne contenant pas d'oxygène se répartit autour de la nervure 86 et donc de la périphérie de la partie de collecte d'hydrogène 18. Ce flux de vapeur d'eau créé selon l'invention un volume tampon de gaz sur toute la périphérie de la nervure 86, c'est-à-dire sur toute la périphérie du conduit 18 de collecte d'hydrogène, comme cela ressort des flèches larges symbolisées en figure 3A. Ce volume tampon est en légère surpression par conception avec l'hydrogène collecté dans le conduit 18.

L'oxygène produit à l'anode 9 tout au long des compartiments anodiques 9 est collecté dans le conduit de collecte dédié 17. Plus précisément comme illustré en figure 2B, l'oxygène produit circulant selon les flèches 13, parvient dans la zone de la face 8B jusqu'à l'extrémité de sortie 9.2 anodique entre les nervures 82 adjacentes et pénètre dans le conduit de collecte 17 via les conduits 170.

L'invention qui vient d'être décrite consiste à la fois à :
- faire circuler concomitamment à l'anode et à la cathode de la vapeur d'eau,
- réaliser les extrémités d'entrée anodique et cathodique au plus près des parties de conduite de collecte respectivement d'hydrogène et d'oxygène qui sont réalisées au travers de l'empilement et des plaques interconnectrices, afin de créer un volume tampon de vapeur d'eau légèrement en surpression tout autour de ces parties de collecte. Ainsi, en créant un volume tampon, on crée un débit de fuite constitué de vapeur d'eau non hydrogénée, non encore réduite et ne contenant pas encore d'oxygène. Il peut y avoir des traces issus de la réaction soit par mélange (entre vapeur d'eau non hydrogénée et soit l'oxygène collecté soit l'hydrogène collecté), soit par diffusion mais étant donné la localisation judicieuse du volume tampon ces traces sont dans tous les cas fortement diluées.

Le volume tampon créé selon l'invention à proximité des parties de collecte d'oxygène et d'hydrogène grâce à l'injection de la vapeur d'eau contenant au plus 1% d'hydrogène présente les avantages suivants :
- simplicité de réalisation,
- possibilité de s'affranchir d'un joint d'étanchéité de conception complexe et/ou nécessitant un serrage mécanique important à contrôler,
- garantie d'une sécurité accrue, en cas d'utilisation d'un joint d'étanchéité supplémentaire.

La vapeur d'eau contenant au plus 1% d'hydrogène injectée depuis la périphérie de l'électrolyseur EHT et à proximité de la partie de collecte 18 (voir figure 3A) doit venir d'une enceinte étanche dans laquelle ladite vapeur d'eau est confinée comme décrit et revendiqué dans la demande FR 10 51783.

Bien que non détaillé, il va de soi qu'une ou plusieurs couches de matériaux peuvent être déposées sur chacun des trois constituants (anode, cathode, électrolyte) d'une cellule ainsi que sur les interconnecteurs ou plaques interconnectrices.

D'autres améliorations peuvent être apportées sans pour autant sortir du cadre de l'invention.

Ainsi, dans le mode de réalisation illustré, la réalisation montrée aux figures 2 à 2B illustre la création d'un volume tampon entre l'entrée 11.1 du compartiment cathodique 11 et la périphérie de partie 17 de conduit de collecte de l'oxygène tandis que la réalisation montrée aux figures 3 à 3B illustre la création d'un volume tampon entre l'entrée 9.1 du compartiment anodique 9 et la périphérie de partie 18 de conduit de collecte de l'hydrogène.

On peut tout aussi prévoir une architecture d'électrolyseur EHT en quelque sorte inversée, c'est-à-dire avec la réalisation montrée aux figures 2 à 2B qui permettrait la création d'un volume tampon entre l'entrée 9.1 du compartiment anodique 11 et la périphérie de partie 17 de conduit qui collecte de l'hydrogène tandis que la réalisation montrée aux figures 3 à 3B permettrait la création d'un volume tampon entre l'entrée 11.1 du compartiment cathodique 11 et la périphérie de partie 18 de conduit de collecte qui collecte de l'oxygène. En d'autres termes, on inverse la fonction de collecte des parties 17 et 18 de conduit et on inverse la fonction des compartiments 9 et 11. Cela peut se faire notamment en conservant le même agencement des plaques interconnectrices 8 au sein de l'électrolyseur EHT mais en retournant les cellules d'électrolyse C1, C2..., Cn, les cathodes 2.1, 2.2, ..., 2.n venant alors en regard des faces 8B des plaques 8 tandis que les anodes 4.1, 4.2, ...4.n viennent alors en regard des faces 8A des plaques 8.

On peut aussi prévoir dans un même électrolyseur EHT deux réalisations selon les figures 2 à 2B, c'est-à-dire pour la création d'un volume tampon à la fois entre l'entrée 11.1 du compartiment cathodique 11 et la périphérie de partie 17 de conduit de collecte de l'oxygène et entre l'entrée 9.1 du compartiment anodique 9 et la périphérie de partie 18 de conduit de collecte de l'hydrogène.

On peut aussi prévoir dans un même électrolyseur EHT deux réalisations selon les figures 3 à 3B, c'est-à-dire pour la création d'un volume tampon à la fois entre l'entrée 11.1 du compartiment cathodique 11 et la périphérie de partie 17 de conduit de collecte de l'oxygène et entre l'entrée 9.1 du compartiment anodique 9 et la périphérie de partie 18 de conduit de collecte de l'hydrogène.

On peut aussi prévoir dans un même électrolyseur EHT, une réalisation selon les figures 2 à 2B et une réalisation selon les figures 3 à 3B.

On peut aussi prévoir dans un même électrolyseur EHT que chaque extrémité cathodique 11.1 soit agencée à proximité de la partie 18 de conduit de collecte d'hydrogène et que chaque extrémité anodique 9.1 soit agencée à proximité de la partie 17 de conduit de collecte d'oxygène : les zones tampons selon l'invention sont alors créées entre l'entrée et la sortie d'un même gaz produit (H2 ou 02).

Par ailleurs, si dans l'exemple décrit, la vapeur d'eau à l'entrée des compartiments anodique et cathodique est non hydrogénée, il va de soi que cette vapeur d'eau peut aussi contenir des gaz qui ne participent pas à la réaction d'électrolyse proprement dite, tel que de l'azote et/ou du CO2 en vue de faire un hydrocarbure.

Enfin bien que décrite uniquement avec l'application à l'électrolyse de l'eau, il va de soi que l'invention peut s'appliquer à d'autres réacteurs électro-catalyse à la condition que le(s) gaz d'entrée puisse(nt) être considéré(s) comme neutre ou non nuisible vis-à-vis des gaz de sortie (gaz de réaction) et que la présence minime du(des) gaz d'entrée dans l'un des gaz de sortie ne gêne pas pour la collecte de celui-ci (ceux-ci).

## Revendications

1. Réacteur pour électrolyse de l'eau à hautes températures, comprenant un empilement de cellules d'électrolyse élémentaires (C1, C2...Cn) formées chacune d'une cathode (2.1, 2.2), d'une anode (4.1, 4.2) et d'un électrolyte (6.1, 6.2) intercalé entre la cathode et l'anode, au moins une plaque interconnectrice (8) étant agencée entre deux cellules élémentaires adjacentes et en contact électrique avec une électrode d'une des deux cellules élémentaires et une électrode de l'autre des deux cellules élémentaires, la plaque interconnectrice délimitant au moins un compartiment cathodique (11) et au moins un compartiment anodique (9) pour la circulation de gaz respectivement à la cathode et l'anode,
dans lequel l'une des extrémités des compartiments cathodique (11), dite extrémité d'entrée cathodique, est reliée à une alimentation adaptée pour délivrer de la vapeur d'eau et l'une des extrémités des compartiments anodique (9), dite extrémité d'entrée anodique, est également reliée à une alimentation adaptée pour délivrer de la vapeur d'eau,
dans lequel l'autre des extrémités des compartiments cathodique (11), dite extrémité de sortie cathodique, débouche dans la partie de conduit de collecte de l'hydrogène qui est réalisée au travers de l'empilement de cellules et des plaques interconnectrices et l'autre des extrémités des compartiments anodique (9), dite extrémité de sortie anodique, débouche dans la partie de conduit de collecte de l'oxygène qui est réalisée au travers de l'empilement de cellules et des plaques interconnectrices, et dans lequel chaque extrémité d'entrée cathodique (11.1) est agencée à proximité de la partie de conduit (17) de collecte d'oxygène et/ou de collecte d'hydrogène et chaque extrémité d'entrée anodique (9.1) est agencée à proximité de la partie de conduit (18) de collecte d'hydrogène et/ou de collecte d'oxygène, de telle sorte que la vapeur d'eau créé un volume tampon autour de la périphérie de l'une et/ou de l'autre de la partie de conduit de collecte d'oxygène et d'hydrogène avant ou au début de la réaction de réduction que la vapeur d'eau subit .

2. Réacteur pour électrolyse de l'eau à hautes températures selon la revendication 1, comprenant au moins un conduit (10) pour la circulation de la vapeur d'eau, le conduit (10) étant formé dans la plaque interconnectrice (8), une première extrémité (10.1) dudit conduit étant connectée à l'alimentation adaptée pour délivrer de la vapeur d'eau et une deuxième extrémité (10.2) amenant la vapeur d'eau, débouchant dans une zone à proximité de chaque extrémité d'entrée cathodique ou anodique et de l'une et/ou de l'autre des parties de conduit de collecte d'oxygène et d'hydrogène réalisées au travers de l'empilement de cellules et des plaques interconnectrices, la zone étant conçue pour créer un volume tampon (14) de ladite vapeur d'eau autour de la périphérie de l'une et/ou de l'autre de la partie de conduit de collecte d'oxygène et d'hydrogène avant son arrivée dans l'extrémité d'entrée cathodique ou anodique.

3. Réacteur pour électrolyse de l'eau à hautes températures selon la revendication 2, comprenant au moins une nervure (81) agencée autour de la périphérie de l'une ou l'autre de la partie de conduit de collecte d'oxygène et d'hydrogène, la(les) nervure(s) étant adaptée(s) pour permettre le guidage par refoulement de la vapeur d'eau à la sortie de la deuxième extrémité du conduit vers l'extrémité d'entrée cathodique ou anodique.

4. Réacteur pour électrolyse de l'eau à hautes températures selon la revendication 3, comprenant une pluralité de nervures supplémentaires (80) agencées en regard de la nervure (81) autour de la périphérie de l'une ou l'autre de la partie de conduit de collecte d'oxygène et d'hydrogène, l'espace entre deux nervures supplémentaires adjacentes (80) délimitant une extrémité d'entrée cathodique ou anodique permettant d'augmenter la vitesse de la vapeur d'eau refoulée.

5. Réacteur pour électrolyse de l'eau à hautes températures selon la revendication 1, dans lequel chaque extrémité d'entrée cathodique et/ou anodique est agencée en périphérie du réacteur pour recevoir de la vapeur d'eau autour du réacteur, et à proximité de l'une et/ou de l'autre des parties de conduit de collecte d'oxygène et d'hydrogène réalisées au travers de l'empilement de cellules et des plaques interconnectrices, la zone définie entre l'extrémité d'entrée cathodique ou anodique et de l'une et/ou de l'autre des parties de conduit de collecte d'oxygène et d'hydrogène étant conçue pour créer un volume tampon (13) de ladite vapeur d'eau autour de la périphérie de l'une et/ou de ou l'autre de la partie de conduit de collecte d'oxygène et d'hydrogène.

6. Réacteur pour électrolyse de l'eau à hautes températures selon la revendication 5, comprenant au moins une nervure (84, 85, 86) agencée autour de la périphérie de l'une ou l'autre de la partie de conduit de collecte d'oxygène et d'hydrogène, la(les) nervure(s) étant adaptée(s) pour permettre le guidage périphérique (13) de la vapeur d'eau autour de ladite partie de conduit de collecte.

7. Réacteur pour électrolyse de l'eau à hautes températures selon l'une des revendications précédentes, destiné à fonctionner à des températures supérieures à 450°C, typiquement comprises entre 700°C et 1000°C.

## Patentansprüche

1. Reaktor für die Elektrolyse von Wasser bei hohen Temperaturen, umfassend einen Stapel von Elektrolyse-Elementarzellen (C1, C2...Cn), die jeweils mit einer Kathode (2.1, 2.2), einer Anode (4.1, 4.2) und einem Elektrolyten (6.1, 6.2) gebildet sind, der zwischen der Kathode und der Anode eingefügt ist, wobei wenigstens eine Zwischenverbindungsplatte (8) zwischen zwei benachbarten Elementarzellen angeordnet und in elektrischem Kontakt mit einer Elektrode einer der zwei Elementarzellen und einer Elektrode der anderen der zwei Elementarzellen ist, wobei die Zwischenverbindungsplatte wenigstens eine Kathodenkammer (11) und wenigstens einer Anodenkammer (9) für die Zirkulation von Gas an der Kathode bzw. der Anode begrenzt,
wobei eines der Enden der Kathodenkammer (11), genannt Kathodeneingangsende, mit einer Versorgung verbunden ist, die dazu ausgelegt ist, Wasserdampf zu liefern, und eines der Enden der Anodenkammer (9), genannt Anodeneingangsende, ebenfalls mit einer Versorgung verbunden ist, die dazu ausgelegt ist, Wasserdampf zu liefern,
wobei das andere der Enden der Kathodenkammer (11), genannt Kathodenausgangsende, in den Bereich der Wasserstoffsammelleitung mündet, die durch den Stapel von Zellen und Zwischenverbindungsplatten hindurch realisiert ist, und das andere der Enden der Anodenkammer (9), genannt Anodenausgangsende, in den Bereich der Sauerstoffsammelleitung mündet, die durch den Stapel von Zellen und Zwischenverbindungsplatten hindurch realisiert ist, und wobei jedes Kathodeneingangsende (11.1) in der Nähe des Bereichs der Sauerstoffsammelleitung (17) und/oder Wasserstoffsammelleitung angeordnet ist, und jedes Anodeneingangsende (9.1) in der Nähe des Bereichs der Wasserstoffsammelleitung (18) und/oder Sauerstoffsammelleitung angeordnet ist, derart, dass der Wasserdampf ein Puffervolumen um den Umfang des einen und/oder des anderen des Bereichs der Sauerstoff- und Wasserstoffsammelleitung vor oder zu Beginn der Reduktionsreaktion erzeugt, die der Wasserdampf durchläuft.

2. Reaktor für die Elektrolyse von Wasser bei hohen Temperaturen nach Anspruch 1, umfassend wenigstens eine Leitung (10) für die Zirkulation des Wasserdampfs, wobei die Leitung (10) in der Zwischenverbindungsplatte (8) gebildet ist, wobei ein erstes Ende (10.1) der Leitung an die Versorgung angeschlossen ist, die dazu ausgelegt ist, Wasserdampf zu liefern, und ein zweites Ende (10.2), welches den Wasserdampf herbeiführt, in eine Zone in der Nähe jedes Kathoden- oder Anodeneingangsendes und des einen und/oder des anderen der Bereiche der Sauerstoff- und Wasserstoffsammelleitung mündet, die durch den Stapel von Zellen und Zwischenverbindungsplatten hindurch realisiert sind, wobei die Zone dazu ausgelegt ist, ein Puffervolumen (14) des Wasserdampfs um den Umfang des einen und/oder des anderen der Bereiche der Sauerstoff- und Wasserstoffsammelleitung vor seinem Eintreffen in dem Kathoden- oder Anodeneingangsende zu erzeugen.

3. Reaktor für die Elektrolyse von Wasser bei hohen Temperaturen nach Anspruch 2, umfassend wenigstens eine Rippe (81), die um den Umfang des einen oder des anderen der Bereiche der Sauerstoff- und Wasserstoffsammelleitung herum angeordnet ist, wobei die Rippe(n) dazu ausgelegt ist/sind, eine Druckführung des Wasserdampfs am Ausgang des zweiten Endes der Leitung hin zum Kathoden- oder Anodeneingangsende zu ermöglichen.

4. Reaktor für die Elektrolyse von Wasser bei hohen Temperaturen nach Anspruch 3, umfassend eine Mehrzahl von zusätzlichen Rippen (80), die gegenüber der Rippe (81) um den Umfang des einen oder des anderen der Bereiche der Sauerstoff- und Wasserstoffsammelleitung herum angeordnet sind, wobei der Raum zwischen zwei benachbarten zusätzlichen Rippen (80) ein Kathoden- oder Anodeneingangsende begrenzt, was eine Erhöhung der Geschwindigkeit des Wasserdampfs unter Druck erlaubt.

5. Reaktor für die Elektrolyse von Wasser bei hohen Temperaturen nach Anspruch 1, bei dem jedes Kathoden- und/oder Anodeneingangsende am Umfang des Reaktors angeordnet ist, um Wasserdampf um den Reaktor herum zu empfangen, sowie in der Nähe des einen und/oder des anderen der Bereiche der Sauerstoff- und Wasserstoffsammelleitung, die durch den Stapel von Zellen und Zwischenverbindungsplatten hindurch realisiert sind, wobei die Zone, die definiert ist zwischen dem Kathoden- oder Anodeneingangsende und dem einen und/oder dem anderen der Bereiche der Sauerstoff- und Wasserstoffsammelleitung dazu ausgelegt ist, ein Puffervolumen (13) des Wasserdampfs um den Umfang des einen und/oder des anderen der Bereiche der Sauerstoff- und Wasserstoffsammelleitung herum zu erzeugen.

6. Reaktor für die Elektrolyse von Wasser bei hohen Temperaturen nach Anspruch 5, umfassend wenigstens eine Rippe (84, 85, 86), die um den Umfang des einen oder des anderen der Bereiche der Sauerstoff- und Wasserstoffsammelleitung herum angeordnet ist, wobei die Rippe(n) dazu ausgelegt ist/sind, die Umfangsführung (13) des Wasserdampfs um den Bereich der Sammelleitung herum zu ermöglichen.

7. Reaktor für die Elektrolyse von Wasser bei hohen Temperaturen nach einem der vorhergehenden Ansprüche, der dazu ausgelegt ist, bei Temperaturen über 450°C zu funktionieren, typischerweise zwischen 700°C und 1000°C.

## Claims

1. A reactor for high-temperature electrolysis of water, including a stack of elementary electrolysis cells (C1, C2,...Cn), each formed of a cathode (2.1, 2.2), an anode (4.1, 4.2) and an electrolyte (6.1, 6.2) sandwiched between the cathode and the anode, where at least one interconnecting plate (8) is fitted between two adjacent elementary cells, in electrical contact with an electrode of one of the two elementary cells and an electrode of the other of the two elementary cells, where the interconnecting plate delimits at least one cathodic compartment (11) and at least one anodic compartment (9) for gas to flow respectively in the cathode and in the anode,
in which one of the ends of the cathodic compartments (11), called the cathode inlet end, is connected to a feed able to deliver steam, and one of the ends of the anodic compartments (9), called the anode inlet end, is also connected to a feed able to deliver steam,
in which the other of the ends of the cathodic compartments (11), called the cathode outlet end, emerges in the portion of the hydrogen collection duct which is made through the stack of cells and of the interconnecting plates, and the other of the ends of the anodic compartments (9), called the anode outlet end, emerges in the oxygen collection duct portion which is made through the stack of cells and of the interconnecting plates,
and in which each cathode inlet end (11.1) is positioned close to the oxygen collection and/or hydrogen collection duct portion (17), and each anode inlet end (9.1) is positioned close to the hydrogen collection and/or oxygen collection duct portion (18), such that steam creates a buffer volume around the periphery of one and/or other of the oxygen and hydrogen collection duct portions before or at the beginning of the reduction reaction that steam undergoes.

2. A reactor for high-temperature electrolysis of water according to claim 1, including at least one duct (10) where the steam can flow, where the duct (10) is formed in the interconnecting plate (8), where a first end (10.1) of the said duct is connected to the feed able to deliver steam and a second end (10.2) conveys the steam, emerging in an area close to each cathode or anode inlet end, and to one and/or the other of the oxygen and hydrogen collection duct portions made through the stack of cells and the interconnecting plates, and where the area is designed to create a buffer volume (14) of the said steam around the periphery of one and/or other of the oxygen and hydrogen collection duct portions before it arrives in the cathode or anode inlet end.

3. A reactor for high-temperature electrolysis of water according to claim 2, including at least one rib (81) positioned around the periphery of one or other of the oxygen and hydrogen collection duct portions, where the rib(s) is/are able to allow the guidance by pushing back the steam at the outlet of the second end of the duct towards the cathode or anode inlet end.

4. A reactor for high-temperature electrolysis of water according to claim 3, including multiple additional ribs (80) positioned opposite the rib (81) around the periphery of one or other of the oxygen and hydrogen collection duct portions, where the space between two adjacent additional ribs (80) delimits a cathode or anode inlet end enabling the speed of the discharge to steam to be increased.

5. A reactor for high-temperature electrolysis of water according to claim 1, in which each cathode and/or anode inlet end is positioned on the periphery of the reactor to receive steam around the reactor, and close to one and/or the other of the oxygen and hydrogen collection duct portions made through the stack of cells and of the interconnecting plates, where the area defined between the cathode or anode inlet end and one and/or other of the oxygen and hydrogen collection duct portions is designed to create a buffer volume (13) of the said steam around the periphery of one and/or other of the oxygen and hydrogen collection duct portions.

6. A reactor for high-temperature electrolysis of water according to claim 5, including at least one rib (84, 85, 86) positioned around the periphery of one or other of the oxygen and hydrogen collection duct portions, where the rib(s) is/are able to allow the peripheral guidance (13) of the steam around the said collection duct portion.

7. A reactor for high-temperature electrolysis of water according to one of the previous claims, intended to operate at temperatures of over 450°C, typically between 700°C and 1000°C.
